**Europäisches Patentamt**

**European Patent Office**

**Office européen des brevets**

(18)

(11) Publication number: **0 118 531**

**B1**

(12) # EUROPEAN PATENT SPECIFICATION

(45) Date of publication of patent specification: **30.03.88**

(51) Int. Cl.⁴: **B 65 G 63/04**

(21) Application number: **83902941.0**

(22) Date of filing: **01.09.83**

(86) International application number:
**PCT/US83/01349**

(87) International publication number:
**WO 84/00948 15.03.84 Gazette 84/07**

(54) **APPARATUS AND METHOD FOR UNLOADING BULK MATERIALS.**

(30) Priority: **02.09.82 US 414383**

(43) Date of publication of application:
**19.09.84 Bulletin 84/38**

(45) Publication of the grant of the patent:
**30.03.88 Bulletin 88/13**

(84) Designated Contracting States:
**FR**

(56) References cited:
**DE-A-2 643 653**
**DE-A-3 008 382**
**DE-A-3 034 465**
**DE-U-7 200 273**
**FR-A-2 190 696**
**FR-A-2 475 014**
**US-A-2 233 085**
**US-A-2 559 557**
**US-A-2 831 587**
**US-A-3 146 898**
**US-A-3 392 818**
**US-A-3 593 966**
**US-A-3 595 405**
**US-A-3 602 552**
**US-A-3 690 731**
**US-A-3 693 842**
**US-A-3 836 019**

(73) Proprietor: **MILLER FORMLESS CO., Inc.**
**1805 N. Dot Road**
**McHenry, Illinois 60050 (US)**

(72) Inventor: **MILLER, David J.**
**4206 Crystal Road**
**McHenry IL (US)**
Inventor: **MILLER, Allen R.**
**2004 N. Ringwood Road**
**McHenry IL (US)**
Inventor: **MILLER, Charles P.**
**1617 N. Draper**
**McHenry IL (US)**

(74) Representative: **Haecker, Walter**
**Patentanwaltskanzlei Höger, Stellrecht &**
**Partner Uhlandstrasse 14c**
**D-7000 Stuttgart 1 (DE)**

(56) References cited:
**US-A-3 838 847**
**US-A-3 857 499**
**US-A-3 867 969**
**US-A-4 019 641**
**US-A-4 020 953**
**US-A-4 026 426**
**US-A-4 268 204**

Courier Press, Leamington Spa, England.

EP 0 118 531 B1

## Description

This invention relates to an apparatus for transferring a supply of dusty bulk material disposed at a first location to a predetermined second location comprising in combination support means proximate the second location and being selectively rotatable about a substantially vertical first axis, an elongated first conveyor means connected to and rotatable as a unit with said support means about said first axis and being selectively, pivotally, movable independently of said support means about a substantially horizontal second axis projecting outward of said support means and supported only at one end by said support means, said conveyor means including an elongated dust-shielding enclosure through which portions of the bulk material pass in a direction toward a discharge end formed in said enclosure, said discharge end being adjacent said support means, an elongated second conveyor means spaced from said support means and connected to and depending from a distal portion of said first conveyor means and being selectively, pivotally, movable independently of said first conveyor means about a substantially horizontal third axis, said second conveyor means including an elongated dust-shielding enclosure through which portions of the bulk material pass in a direction toward an inlet end of the enclosure of said first conveyor means, feeder means including an uplift portion comprising an auger having an exposed end portion and to a method of making use of such an apparatus.

An apparatus of this general type is known from US—A—4,020,953. In the known apparatus the feeding capacity of the exposed end portion of an auger strongly depends on the depth with which the end portion enters into the bulk material. More specifically, when the end portion enters completely into the bulk material it is likely that the second conveyor is overloaded while the feeding capacity becomes insufficient, both regarding the transportation efficiency and the complete cleaning of the container insofar as only a flat, limited residual layer of the bulk material remains at the bottom of the respective container.

Generally, this invention relates to the top unloading of bulk materials from relatively large cargo containers or vessels, or the transfer of bulk material from a cargo container to a material transport, handling or storage system. More particularly, this invention relates to the unloading of dry powder-like cement or other loose, dry material from a barge or the like. It is especially useful where the container does not have a self-contained unloading means or crane, or is not equipped with a gravity feed system. Moreover, the unloader of the present invention may be portable and self-contained, for operation from work barges, ships, or the like.

Dry cement is a fine powdered material (similar to talc) and is referred to hereinafter as "cement". Its size is very fine sieve opening ca. 0.15 mm (100 mesh or under); it is relatively free flowing at an angle of repose of 30° to 45°; and it is mildly abrasive. When aerated it becomes fluid-like, but when packed or if it settles, it becomes very dense and difficult to handle. Cement is widely utilized in construction because it has strong adhesive properties after it is combined with water. Once properly mixed, it sets in a few hours and cures or fully hardens over a period of weeks.

Manufactured in large plants, the cement may be transported in bulk quantities by truck, rail or barge. However, due to its physical properties and fickle nature, cement requires a unique handling system. Small quantities may be conveniently unloaded or moved with a pneumatic system, but this has not proven efficient or effective for larger quantities. Thus, mechanical systems have been relied upon. However, due to its powdery nature, the density of cement may vary from a relatively light, fluffy and fluid-like or relatively free flowing aerated mixture of less than 0.8 kg/dm$^3$ (fifty pounds per cubic foot), to a heavy, more solid and concentrated mass of over 2.4 kg/dm$^3$ (150 pounds per cubic foot).

Depending upon the conditions encountered upon loading and during transport, the cement may become tightly compacted, requiring a mechanical, rather than pneumatic, unloader. In addition, when the cement is being transported, and even during the unloading process, the movement and vibration may cause the cement to settle or compact to its more dense state, causing pneumatic systems to plug and mechanical systems to jam, overload or bind. This usually results in undesirable and expensive down-time, accelerates wear and tear on equipment that is already operating in a harsh environment and may result in equipment failure. On the other hand, even when the cement is in its fluffy aerated condition, it poses unique handling and transport problems because it is dust-like and requires a closed transport system to minimize pollution, loss and wear of equipment due to abrasion. This also protects the cement from exposure to elements which may contaminate it, or cause it to absorb moisture and harden. For this latter reason, it is important that the bulk container be emptied completely so that residual cement does not set up and harden each time the container is used.

Other bulk material unloading systems are available and known in the prior art but most are gargantuan, requiring heavy capacity dockside cranes, shop derricks, or the use of gantry cranes that are supported by the container or barge. Still others are not suitable for handling cement. In addition, some of these unloaders required that the barge or container be moved in order to reach all areas of the interior of the container.

Proceeding on the basis of the prior art it is the object of the present invention to provide an improved unloading apparatus for bulk materials which is capable of efficiently handling and unloading dusty bulk materials, especially cement, to a material transporting, handling or storage system. More specifically, the invention aims at an improved unloading apparatus that may reach all areas of the cargo container to remove nearly all of the bulk material.

The object of this invention is accomplished through an apparatus of the type indicated at the outset and characterized in that said uplift portion comprises an uplift dust-shielding enclosure surrounding a portion of said auger having an exposed end portion, that one end of said uplift portion is attached to a lower distal end portion of the enclosure of said second conveyor means, that said uplift portion is designed such that portions of the bulk material pass through said uplift portion in a direction toward the said lower distal end portion of said second conveyor means at a rate slower than the rate the bulk material portions pass through said second conveyor means enclosure, and that said feeder means also includes a collecting portion comprising a pair of collecting augers disposed with one on each side of said exposed portion with their axes of rotation generally normal to the axis of rotation of said exposed portion for collecting said bulk material and loading it into said uplift portion and said second conveyor means, respectively, said pair of collecting augers being mounted for pivoting adjustment relative to the longitudinal axis of said exposed portion.

The inventive method of making use of such an apparatus is the subject matter of patent claim 27.

The inventive apparatus may further include an aeration system to inject air into the bulk material during transport by the unloading apparatus, a set of scrapers mounted on said feeder means to assist in removing the last portions of the bulk material from the container, dust-tight conveyors to minimize loss and contamination of the material, and a take-away system to carry the bulk material to another location after it has been unloaded.

As is apparent from the above, the inventive apparatus is similar in a sense to an unloading assembly described in US—A—3,836,019 regarding the provision of augers belonging to the feeder means. On the other hand, the known assembly comprises two separate units, namely a gantry crane mounted on the vessel to be unloaded and a separate wagon disposed on the dock. A further pertinent difference is to be seen in the fact that the supply head of the known assembly comprising said augers does not pivot or move in any way with respect to its associated uplift conveyor which greatly limits the flexibility and effectiveness of the feeding mechanism. Moreover, there are certain similarities between the inventive apparatus and another conveying apparatus known from US—A—2,233,085. This known conveying apparatus comprises a feeding auger which is rotatable with respect to the inlet end of a conveyor. However, in the known apparatus the feeder assembly is to be mounted at the bottom of a vessel or bin to be unloaded. Thus, the known conveying apparatus is not useful for movement over a comparatively large area simultaneously with the conveyor to be supplied by said feeding means.

In operation of the inventive apparatus the bulk material is moved by the collecting portion of the feeder into the uplift portion thereof and then into the second conveyor means, transferred to the first conveyor means and discharged therefrom.

Preferred embodiments of the invention have been made the subject matter of various subclaims.

The invention will now be explained in more detail in conjunction with the enclosed drawings.

Fig. 1 is a perspective view of the unloading apparatus of the present invention illustrating the feeder head engaging the bulk material and with the scraper means raised.

Fig. 2 is a perspective, partially exploded and cutaway view of the second or generally vertical conveyor means of the present invention, and its pivotal connections to the first or generally horizontal conveyor means.

Fig. 3 is a perspective, partial cutaway view of the feeder head of the present invention with one of the scraper means in a lowered position.

Fig. 4 is a perspective view of a take-away means of the present invention as it is usually disposed, i.e. underneath the support means, to receive the unloaded bulk material. The base of the support means is illustrated in phantom lines.

Fig. 5 is a perspective view of an alternate embodiment of the unloading apparatus of the present invention.

Fig. 6 is a perspective, partial cutaway view of an alternate embodiment of a portion of the present invention, illustrating the pivot connection between the first and second conveyor means being suspended from overhead.

Fig. 7 is a perspective, partial cutaway view of an alternate embodiment of a portion of the present invention, illustrating a connection between the first or generally horizontal conveyor means and a take-away means.

Description of the preferred embodiment

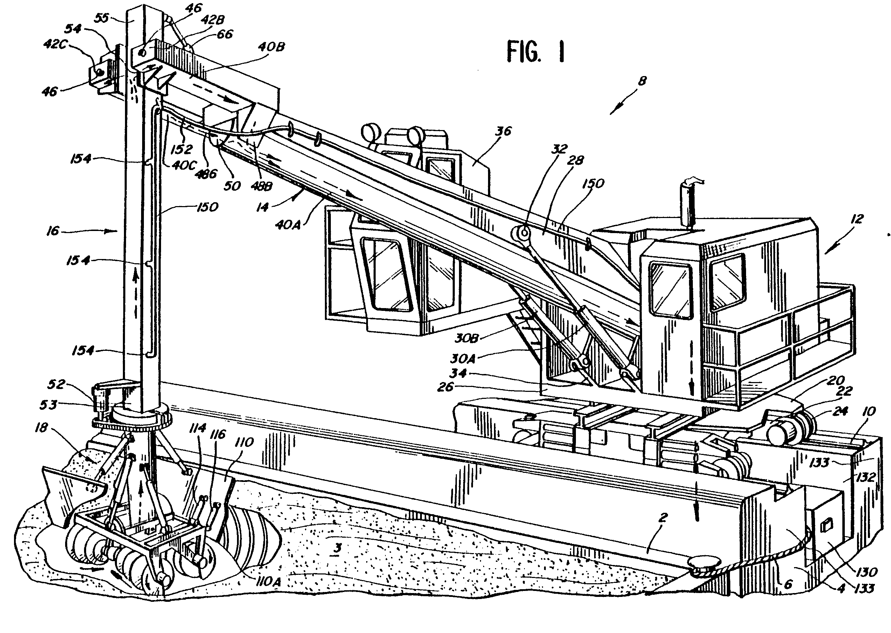

As seen in Fig. 1, a barge 2 or other vessel or container of bulk material 3 is floated and secured next to a dock structure 4, pier, or other unloading area by cable 6 or the like to maintain it in position. The bulk material unloading apparatus 8 is adjacent the edge of the dock structure 4 and selectively moves parallel to the barge on rails or tracks 10. The unloader 8 generally comprises a support means 12, a first conveyor means 14, a second conveyor means 16, and a feeder means 18. Each of these components is discussed in detail in the following description, with reference to the drawings.

As illustrated, a set of tracks or rails 10 runs parallel to the barge to support and selectively transport the unloading apparatus 8 without moving the barge. Alternatively, the unloading apparatus could be mounted on crawler tracks (see Fig. 5) or mounted on rails for movement perpendicular to the length of the barge. In addition, it may be desirable or more convenient to move the barge rather than the unloading apparatus.

The support means 12 includes an undercarriage 20 that comprises trucks 22 of conventional design having suitably journalled wheels 24 retained therein. The wheels illustrated are double flanged, i.e. H-shaped when viewed from a radially distant position, and are complimentary to the rails 10. Suitable motive and braking means (not shown) may power or lock the wheels as necessary or desirable to effect movement or retain the undercarriage in position along the length of the rails 10.

A support platform 26 is superposed the undercarriage 20 and is preferably selectively rotatably mounted thereon, for crane-like rotational or panning movement about a vertical axis independent of the undercarriage. The platform 26 forms a convenient base for any motive power necessary for the unloader. A boom 28 has its proximal end attached to the platform 26 in a conventional manner for pivotal movement in a vertical plane. The boom may be of any convenient configuration provided that its length is sufficient to reach from the support 12 to approximately the center of the barge 2, and further provided that it will support the weight of the conveyor means, feeding means, and material in transit.

A pair of extensible cylinders 30A, 30B, suitably controlled by hydraulic fluid or the like, raise and lower the boom, and retain it in a selected vertical position as desired by the operator. The cylinders 30A, 30B may be of any type well known in the art, as may be their controls, and they typically extend between a somewhat centrally located standard 32 on the boom and a portion 34 of the platform displaced from the proximal end of the boom 28 where it is attached to the platform. The cylinders are preferably double action to exert additional downward force if necessary. In addition, they may incorporate a balance feature which exerts sufficient upward pressure on the boom to minimize the weight imposed on the feeder head yet still keep it in contact with the cement.

An operator's cab 36 is positioned adjacent the boom to provide an unobstructed view of the bulk material container. All controls for the operation of the unloader and equipment monitoring its operation may be located in the cab.

The first conveyor means 14 is an auger that is generally horizontally supported by, and may be attached to, the boom 28 in a convenient manner. In Fig. 1 it is attached to the underside of the box-like boom 28, and, as an alternative, it may be suspended from a boom as illustrated in Fig. 5. In Fig. 1, the first conveyor comprises a main portion 40A and a yoke portion 40B, 40C, all three portions being supported by the boom 28. Each portion is an auger or screw type conveyor. The augers for each portion are preferably single screws, each having suitable bearings provided as necessary, such as 46, and each may be powered with a bidirectional variable speed hydraulic motor. These generally horizontal augers may be of uniform pitch to provide a uniform feed along their entire length. A relatively long or high pitch is preferred to maintain rapid movement of the cement. Further details on auger design are discussed in connection with the second or generally vertical auger.

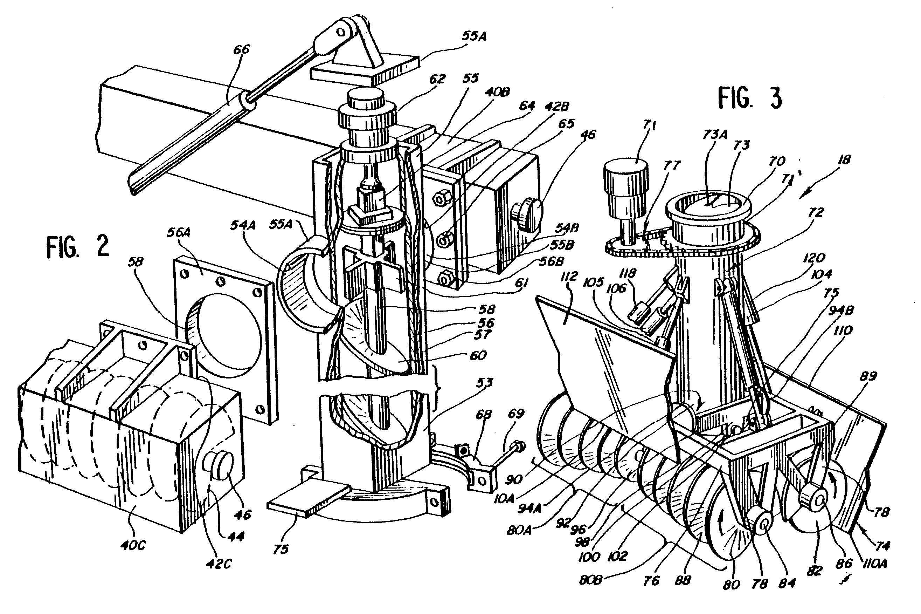

Referring also now to Fig. 2, and using like numerals to designate like items, the entrance or intake portion 42B, 42C of each respective side of the yoke portion 40B, 40C is disposed proximate the distal end of the first conveyor means, and is adjacent one end of an internal screw-like auger 44. The discharge end 48B, 48C of the respective yoke portions transfer the bulk material from the yoke augers to each side of the intake end 50 of the main portion 40A of the first conveyor means, which discharges preferably near the center of rotation of the support means 12. The sheath or housing for each auger may be cylindrical or rectangular, and is preferably dust-tight.

The second conveyor means 16 is pivotally connected to the distal end or yoke end of the first conveyor means, and is generally vertically suspended therefrom. Like the first conveyor means 14, the second conveyor means is an auger or screw type conveyor, similarly powered, with an intake 52 at the distal end 53 and a pair of oppositely directed, tubular, tangentially extending discharge portions 54A, 54B at the proximal end 55.

Referring primarily to Fig. 2, the conveyor or auger sheath 56 houses an auger shaft 58 having a single helical flight 60, or alternatively multiple flights, attached along the length thereof. The auger sheath is cylindrical, to match the auger screw, and it may be disposed within a enclosure of the second conveyor means (16), such as the box-like one designated 57, for additional support. The flight increases in pitch from intake to discharge along at least a portion of the length of the second conveyor beginning at the intake to help maintain a loose or aerated state of the material. A set of paddles 61 is radially attached to the auger-shaft 58 in spoke-like fashion directly adjacent the discharges 54A, 54B to assist in tangentially discharging the material from the second auger to the intakes of the yoke portions 40B, 40C. A hydraulic motor 62 is attached to the auger sheath and coaxial with the auger shaft. The motor is connected to the auger shaft 58 through a thrust bearing 64.

Each discharge 54A, 54B comprises a tubular conduit 55A, 55B extending from and at right angles to the length of the second conveyor 16, and each is received by a flange plate 56A, 56B defining mating sleeve apertures 58. The flange plates are each releasably secured to, with its aperture 58 coaxial with, the intake 42C for the respective yoke portion 40B, 40C of the first conveyor means. When assembled, as shown in the upper right portion of Fig. 2, each discharge or proximal end 54A, 54B of the second conveyor means is pivotally mounted in dust-tight relation to the distal end of the first conveyor means, being disposed in the space defined between the two yoke portions 40B and 40C. Assembly or repair is facilitated by typically, nut and bolt fastening means 65.

The first and second conveyors are maintained in a common plane and the angle between them may be selectively maintained or changed by an extendible cylinder 66 having one end attached to the first conveyor 14 and a second end attached to the proximal end 55 of the second conveyor 16 by suitable means, such as a cap 55A which is situated on or near the top of the second conveyor means. Such a cylinder may be hydraulically actuated by a conventional control located in the cab 38.

The bearings along the length of the augers deserve special attention due to the abrasive nature of the cement, which may result in a short operational lifetime. As a result conventional bearings are not suitable. One of the more successful designs utilized by applicants comprises a hard iron cylindrical race with a hardened steel auger shaft therethrough. There is a loose fit between the two and the cement impregnates the two wearing surfaces of the bearing and fills the space between them to act as a buffer zone to lubricate and cool the wearing surfaces. However, if the auger is run at a relatively high rate of revolution, the cement is centrifugally cast to the periphery of the auger flighting and the bearing has no cement for lubrication. This can result in rapid deterioration of the bearing and shaft. This problem has been satisfactorily resolved by precision manufacturing of the auger screw and casing sections, so that both are straight or very nearly so, as opposed to having a bowed or banana shape along their length. And, by minimizing the clearance between the auger screw flighting and the surrounding casing, the linear alignment of the auger shaft may be held within smaller tolerances. This further provides an unexpected improvement in efficiency of operation by minimizing slippage of the cement between the auger screw and casing, and permitting operation in the range of 300 to 500 revolutions per minute, which is generally considered to be high speed operation.

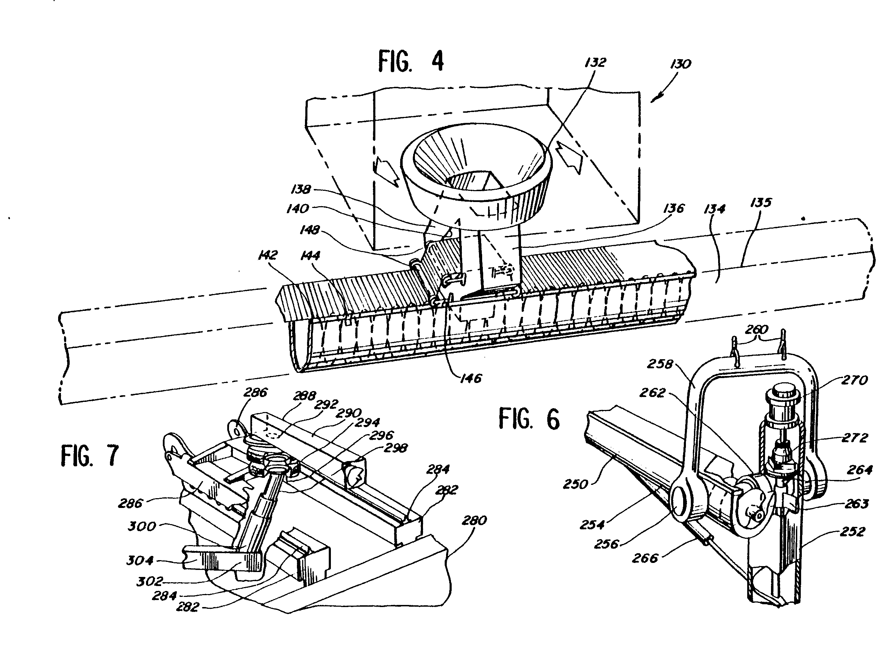

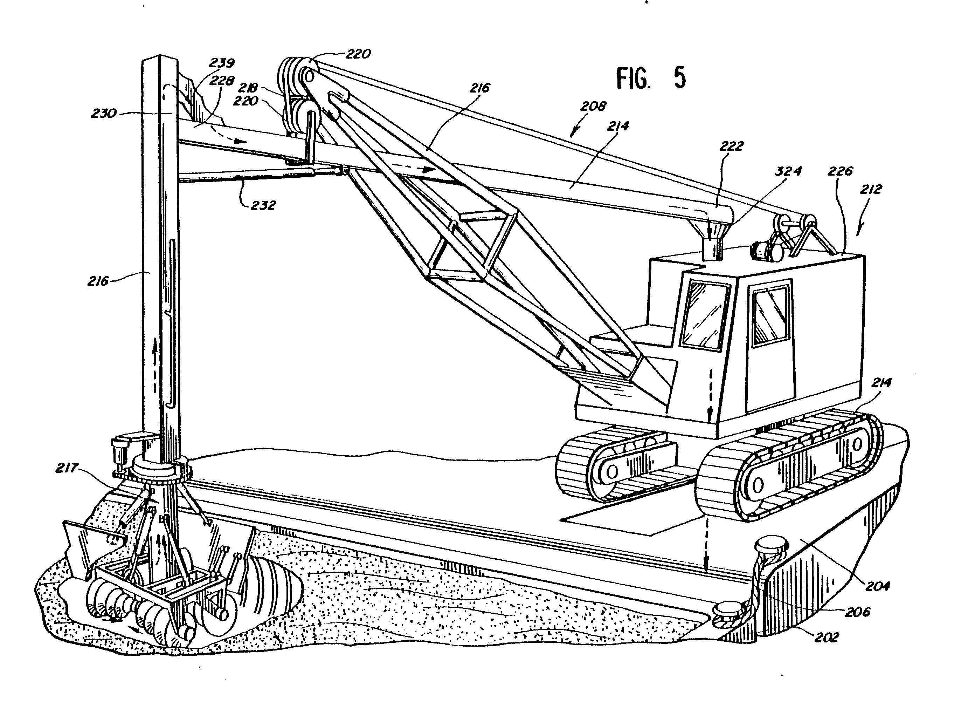

Referring now to Figs. 1—3, the distal or intake end 53 of the second conveyor means 16 includes a split receiving collar 68 fixedly attached to the auger sheath. The collar conforms to an annular flange 70 (see Fig. 3) disposed around the top periphery or discharge end of the feeder means 18. The collar 68 is clamped or compressed circumferentially by a bolt and nut set 69 to engage over the flange 70 and rotatably retain it in dust-tight relation so that the uplift portion 72 of the feeder means 18 is colinear with the second conveyor means 16. A hydraulic motor 71 or the like is attached to the second conveyor means 16 by attachment to the underside of a plate 75, with a sprocket and chain drive 71' operatively connecting it to the uplift portion 72. Operation of the motor will cause the entire feeder head 18 to rotate around its auger axis in either direction with respect to the second conveyor means 16 by turning the flange 70 within the collar 68.

Referring more particularly to Fig. 3, the feeder means 16 includes an uplift portion 72 and a collecting portion 74. The collecting portion includes a pair of counterrotating augers 80, 82 that cause the bulk material to converge near the center of the collecting portion, and the uplift portion is an auger conveyor that moves the converged material upwardly to the entrance of the second or vertical conveyor means 16. A more detailed description follows.

The collecting portion 74 has an open, rectangular frame 76 with depending V-shaped brackets 78 on each end thereof. The brackets support a pair of unenclosed augers 80, 82 for fixed parallel rotational movement. Each auger has a single central shaft 84, 86 connected to its respective bracket by a suitable enclosed, internal hydraulic drive 88, 89 to rotate the auger shafts in opposite directions. Each auger shaft is divided into two sections of substantially equal length, such as 80A and 80B, each having flighting of opposite pitch so that rotation of the shaft conveys material from each journalled end of each shaft to the center of the collecting portion. In addition, the diameter of each auger half for each shaft decreases from the journalled end to the center portion, resulting in a tapered flight conveyor.

The central portion 90 of the frame 76 is connected to the inlet portion 92 of the uplift section for universal movement by a gimbal arrangement, i.e. movement similar to that of a universal joint in an automobile drive shaft or that of a gyrocompass. Specifically rocking motion (i.e. pivoting about an axis perpendicular to the auger shafts 84, 86 and perpendicular to the axis of the uplift section 72) is accomplished by attaching to the frame 76, on opposing interior sides thereof, circular plates 94A, 94B that are mounted for free rotation along an axis perpendicular to the auger shafts 84, 86 and perpendicular to the longitudinal axis of the auger shaft for the uplift section 72. The circular plates 94A, 94B are connected together for simultaneous rotation by cross members 96 along opposite sides of uplift portion 72 and each having a length slightly longer than the outside diameter of the sheath for the uplift section. (The cross member on the opposite side is not shown.) Each cross member includes a centrally located depending tab 98, each tab having an aperture 100. This tab permits pitching motion of the frame 76 about an axis parallel to the auger shafts 84, 86 and perpendicular to the axis of the uplift section 72. This is accomplished by connecting the exterior of the sheath for the uplift section 72 to the depending tab 98 by a pintle 102 extending through apertures 100. The pintle extends parallel to the auger shafts 84, 86 and perpendicular to the axis of the auger shaft for the uplift section 72. In this fashion, the circular plates 94A, 94B and the cross members 96 comprise a sub-frame that is rotationally mounted to the frame 76 of the feeder 18.

The orientation of the collecting portion 74 with respect to the uplift section 72 may be controlled by two sets of opposing extensible cylinders, 104—106 (one of the cylinders is not illustrated), such as hydraulic cylinders. The four cylinders are radially disposed around the axis of the uplift conveyor, each 90° from its adjacent cylinders. One end of each cylinder is attached to the uplift section 72, and the opposite end of each cylinder is attached to the collecting portion, preferably its frame 76. Movement may be induced by other suitable means, and it may be limited by the use of mechanical stops.

Also attached to the frame 76, preferably on opposite sides parallel to the axes of the auger shafts 84, 86, are a pair of independently operable scraper plates 110, 112. Each plate is attached to the frame by separated pairs of spaced, hinged arms, such as 114, 116 in Fig. 1, which form a parallelogram linkage and permit the plates to be raised and lowered. The parallel arms permit the lower edges 110A, 112A to descend to a position at least as low as the lowest portion of the augers 80, 82 so that each edge may come into contact with the floor of the barge or container. Controllable extensible cylinders 118, 120, raise and lower the scraper plates 112 and 110 respectively. One end of each cylinder is attached to the uplift section 72, and the opposite end is connected to the corresponding scraper plate.

The uplift portion 72 includes a screw auger 73 extending upwardly from the center portion of the frame 76 for the collecting portion 74. The intake 75 of the uplift portion is a slightly tapered exposed screw auger (i.e. not covered by a housing sheath) which extends downward below the illustrated frame 78 and cross members 96 and between the center sections of the two collecting augers 80, 82. The diameter of the uplift auger 73 is substantially the same as the auger for the second conveyor means 16, e.g. 30.5 cm (12 inches), except that it tapers from 30.5 cm (12 inches) to approximately 10 inches where exposed on the lowermost or intake end 75. The degree and amount of taper may be varied as desirable. The tapered intake end is disposed approximately midway between the counterrotating auger shafts 84, 86 of the collecting portion 74, along a common radius connecting the axial center of each shaft.

The uplift auger 73 is a double flight short pitch screw conveyor, its pitch being less than that of the vertical or second conveyor means 16. This provides more efficient movement of cement by reducing slippage, and a more constant or even flow.

The discharge end 77 of the uplift section includes the annular collar 70 for selective rotational attachment to the second conveyor means 16, as described earlier. The uppermost end 73A of the auger shaft 73 is connected to the auger shaft 58 of the second conveyor means, which provides rotational driving force. Although the two augers rotate at the same speed, the second conveyor means 16 advances the material at a faster rate due to its greater pitch. This dedensifies the cement to maintain it as an aerated fluffy compound and prevent it from packing. The uplift auger is approximately 122 cm (four feet) long and the vertical auger is approximately 731 cm (24 feet) long, although these lengths may vary as necessary or desirable.

Referring now to Figure 4, there is illustrated a take-away means 130 of the present invention. Referring also to Fig. 1, the take-away means is disposed underneath the support means 12 in a channel 132 defined by the supports 133 for the rails 10, and preferably is coextensive with the length of the barge 2 to permit the operator of the unloader maximum range of movement. The take-away means generally includes a funnel 132 that collects material discharged from the proximal end of the first or generally horizontal conveyor means 14, and a conveyor means 134 extending parallel to the tracks 10 to transport the material to another location.

The frusto-conical funnel 132 is preferably suspended, by any convenient means, from the support platform 26 or trucks 20 of the support means 12, and moves therewith. The discharge of the first conveyor is disposed above the center of the funnel 132, and both are preferably centered at the vertical axis of rotation of the support means. The connection between the discharge of the conveyor 16 and the funnel 132 is preferably dust-tight. A pair of discharge chutes 136, 138 are connected to and disposed beneath the funnel top 132 to confine and slideably transport the material away from the funnel. The chutes 136, 138 are bifurcated or elbowed to form a transverse aperture 140 therebetween.

The conveyor means 134, including a frame 135, may be a conventional screw-type or belted conveyor, whichever is appropriate for the material being handled. As illustrated, the conveyor is covered by a fixed flexible belting 142 of suitable weight and width, such as known conveyor belting, that forms a generally dust-tight seal with the top of the screw conveyor 134. Tapered guides 144 may be positioned along the length of the conveyor at its upper edges as necessary to assist in positioning the cover.

A carriage 146, suspended from the moving funnel 132 or riding on top of the conveyor frame 135, lifts and guides the cover through the transverse aperture 140 beneath the funnel top 132. The carriage may be of convenient design and use rollers, guides or skids 148 to continually lift and hold the cover 142 off the conveyor frame at the situs of the discharge chutes 136, 138, as the apparatus 8 traverses therealong on tracks 10, yet maintain the cover in a closed dust-tight relationship at all other locations.

Referring again to Figs. 1 and 3, an aeration system is utilized to inject compressed air into the cement or other material to "fluff" it, or disperse it to prevent it from becoming too densely packed. A supply of compressed air (not shown) may be conveniently located in the support means 12 and is connected to a conduit 150 that is attached to and traverses the length of the first and second conveyor means 14 and 16. A suitable flexible tubing 152 may be utilized as necessary to accommodate pivot or universal connections. A series of nozzles 154 placed one every several dm (feet), conducts the compressed air through the sheath 56 of the auger conveyor means to inject air into the cement. This effectively keeps the cement in suspension. The nozzles may be installed in as many locations as necessary or desirable, depending upon the conditions encountered.

Air is injected by a mechanism, well known in the art, that is responsive to the torque requirements to power the auger screw. As the cement begins to pack more densely, more torque is required, as measured by the magnitude of the pressure drop across the hydraulic supply line and return line to the hydraulic motor rotating the screw. When the pressure differential exceeds a predetermined level, the aeration system is activated to inject air and thereby lessen the cement density and reduce the torque requirements. At the present time, applicant utilizes three nozzles along the length of the vertical or second conveyor means. The pressure of the air supply tank is maintained at about 10.5 kg/cm² (150 pounds per square inch), and, upon actuation, air is injected into the auger perpendicular to its length at a rate of about 1415 dm³ (50 cubic feet) per minute. The air injection provides an almost immediate reduction in density and reduction of torque requirements, which terminates the air injection after about one second. Due to the ability of cement to harden after it becomes wet, it is especially desirable to eliminate any condensate from the compressed air system.

Referring now to Fig. 5, an alternate embodiment of the present invention is illustrated, although many of the components and elements of this alternate embodiment are identical to those described and illustrated in Fig. 1. A barge 202 is secured to a dock 204 by a cable 206. The unloader 208 is adjacent the dock and may selectively move as necessary or desired. The unloader comprises a support means 212, a first conveyor means 214, a second conveyor means 216, and a feeder means 217.

The support means 212 differs from that in Fig. 1 in its use of crawler tracks 214, which lend additional mobility to the unloader. However, this additional mobility may interfere with the installation of a permanent take-away system, as illustrated in Fig. 4.

The boom 216 is pivotally attached to the support means in a conventional manner, and its position and movement may be controlled in any known fashion. The first conveyor means 214 passes through the boom 216 and is suspended therefrom by cables 218 and pulleys 220 to a desired height. The discharge end 222 of the first conveyor is proximate the center of rotation of the support means 212 and superposed a drop means, namely a funnel shaped discharge chute 224.

The discharge chute 224 may empty into a take-away conveyor (not shown) positioned in a convenient location. For example, it may extend from the top 226 of the support means 212, or it may extend from between the tracks 214 below the support means, collecting the material after it has been discharged by the first conveyor means and fallen the depth of the support means to a location beneath it.

The distal or intake end 228 of the first conveyor means 214 is pivotally connected to the discharge or proximal end 230 of the second conveyor means. An extendible cylinder 232, one end connected to the first conveyor 214 and the other end connected to the second conveyor 216, selectively controls the angle between the two. A dust-tight flexible boot or slide 234 may be utilized to transport the cement discharged from the second conveyor 216 to the intake of the first conveyor 214.

The feeder means 217 is as described earlier herein.

Referring to Fig. 6, an alternate embodiment is illustrated for the connection and suspension of a first or generally horizontal conveyor means 250 and a second or generally vertical conveyor means 252. The two conveyor means are connected for pivotal movement in parallel adjacent substantially common planes. The first conveyor 250 has its discharge end (not illustrated) supported by means such as illustrated in Figs. 1 and 4. The intake or distal end 254 is supported in a conventional manner by a pin 256 and clevis 258 arrangement that is suspended from an overhead arm or the like (not illustrated) by cables 260. The second conveyor 252 is vertically suspended from the pin and clevis and is pivotally connected thereto. The discharge of the second conveyor 252 communicates to the intake of the first conveyor 250 through a collar or passageway 262 located radially outwardly from the auger paddles 263 which are attached to the auger shaft 264 for rotational movement immediately adjacent the discharge or collar 262. The angle between the two conveyors may be selected and maintained by an extendible cylinder 266 as disclosed earlier. The auger 268 for the second conveyor means 252 may be driven by a hydraulic motor 270 through a bearing 272, as disclosed earlier.

Referring now to Fig. 7, an alternate embodiment is illustrated for the orientation and movement of the support means and for the take-away means. A barge 280 is secured next to a dock structure 282 to maintain it in position. A set of tracks or rails 284 extends perpendicular to the length of the barge to support and selectively guide the unloading apparatus. A set of trucks 286, such as disclosed in Fig. 1, rollingly engages the rails 284 and transports the support means, which is not illustrated but is similar to that already disclosed. The proximal end 288 of the first conveyor means 290, which is suitably supported, includes a discharge 292 proximate the center of rotation of the support means. Immediately below and connected to the dis-

charge, a flexible joint 294 permits the first conveyor to be raised, lowered, or pivoted, yet still maintain a dust-tight enclosure. The discharge end 296 of the flexible joint is connected to the intake of a telescoping gravity slide 298. The discharge end 300 of the slide 298 is connected to the intake end 302 of a take-away conveyor 304, also suitably supported. The flexible joint 294 permits the telescoping slide 298 to change its orientation with respect to the support means yet still maintain a dust-tight seal.

Description of the operation

Referring primarily to Figs. 1—4, a barge is secured adjacent to an unloading area 4 and the unloading means 8 is moved into position by its trucks 22 moving along the rails 10. The boom 28, already being in a raised position, is lowered by shortening the extendible cylinders 30A, 30B. Simultaneously, the second conveyor means 16, including the feeder means 18, is extended with respect to the first conveyor means 14 and the boom 28, by contracting the extendible means 66 to enlarge the angle between the two conveyor means. The boom is lowered by the cylinders 30A, 30B until the converging augers 80 of the feeder means come into contact with the cement 3 or other bulk material.

With all of the conveyors being energized, the augers 80 and 82 of the feeder means are rotated in opposite directions by their respective hydraulic motors to draw the cement to the center of the collecting portion 74. The exposed auger flighting moves the material to the center and causes it to converge around the exposed, tapered, double flight auger of the uplift portion 72. Although the intake portion of the uplift auger does not have a sheath, the material packs around the intake to define a quasi-sheath and load the auger screw with material for upward transport.

The uplift portion 72 moves the cement upwardly towards the discharge end of the uplift portion which is coincident with the intake portion of the second conveyor means. The uplift portion provides a relatively steady and even rate of discharge of material.

The second conveyor means 16, having an auger with a higher pitch than the auger of the uplift portion, acelerates the cement upwardly, lessening its density and improving its flowability. The cement continues upwardly to the discharge of the second conveyor where it is transferred to the intake 42B, 42C of the yoke portion 40B, 40C of the first conveyor 14. The cement continues along the auger yoke portion to the discharge end 48B thereof, which is in communication and coincident with the intake of the first conveyor 40A. The cement is transferred along the first conveyor means 40A by the auger contained therein and is discharged into the funnel 132 disposed immediately therebelow. The cement passes through the funnel into the discharge chutes 136, 138, underneath the raised belting 142, and into the take-away conveyor 134. The cement is then transferred to another location or stored.

As the cement is moved by the augers, it may pack or become more dense, requiring more torque to rotate the augers. Should the torque exceed a predetermined level, the aeration system is energized to supply compressed air along conduit 150 to the nozzles 154, which inject air into the vertical conveyor, or other conveyors as necessary, and fluff or aerate the cement, making it less dense and lessening the torque requirements to rotate the auger.

The operator may rotate the feeder means 18 with respect to the second conveyor means 16 as necessary by selective operation of the hydraulic motor 74, and he may tilt or pitch the feeder means with respect to the uplift section 72 by manipulating the opposing extendible cylinders 104—106. In addition, the operator may change the radial position of the feeder head by panning the support means about its axis of rotation, or change its depth by raising or lowering the boom 28 and flexing or extending the first conveyor means with respect to the second conveyor means though the operation of the extensible cylinder 66. This provides a back hoe-like operation and permits the operator to reach into the various corners of the barge and beneath any lips surrounding the top of the barge.

Due to the propensity of cement to absorb moisture and harden, it is desirable to remove all of the cement from the barge. The present invention facilitates the ability to do that by lowering the scraper plates 110 or 112, as necessary, to scrape the bottom, walls or corners of the barge. Absent the scraper plates, a layer of cement about 15 cm (1/2 a foot) deep will most likely be left in the bottom; with the scraper plates lowered, this may be reduced to one inch or less, depending upon the flatness of the barge floor.

The invention has been described in detail with particular reference to a preferred embodiment and selected alternative and the operation thereof, but it is understood that other variations, modifications, and the substitution of equivalent mechanisms can be effected within the scope of this invention. For instance, one may substitute a belted conveyor for the first or generally horizontal conveyor provided that the belted conveyor is maintained in a generally horizontal position.

**Claims**

1. An apparatus for transferring a supply of dusty bulk material (3) disposed at a first location (2) to a predetermined second location comprising in combination:

support means (12) proximate the second location and being selectively rotatable about a substantially vertical first axis;

an elongated first conveyor means (14) connected to and rotatable as a unit with said support means (12) about said first axis and being selectively, pivotally, movable independently of said support means (12) about a substantially horizontal second axis projecting outward of said support means (12) and supported only at one end by said support means (12), said conveyor means including an elongated dust-shielding enclosure through which portions of the bulk material pass in a direction toward a discharge end formed in said enclosure, said discharge end being adjacent said support means;

an elongated second conveyor means (16) spaced from said support means (12) and connected to and depending from a distal portion of said first conveyor means (14) and being selectively, pivotally, movable independently of said first conveyor means (14) about a substantially horizontal third axis, said second conveyor means (16) including an elongated dust-shielding enclosure (56) through which portions of the bulk material pass in a direction toward an inlet end of the enclosure of said first conveyor means;

feeder means (18) including an uplift portion (72) comprising an auger (73) having an exposed end portion, said feeder means (18) being characterized in that said uplift portion (72) comprises an uplift dust-shielding enclosure surrounding a portion of said auger (73) having an exposed end portion, that one end of said uplift portion (72) is attached to a lower distal end portion (53) of the enclosure (57) of said second conveyor means (16), that said uplift portion (72) is designed such that portions of the bulk material (3) pass through said uplift portion (72) in a direction toward the said lower distal end portion (53) of said second conveyor means (16) at a rate slower than the rate the bulk material portions pass through said second conveyor means enclosure (57), and that said feeder means (18) also includes a collecting portion (74) comprising a pair of collecting augers (80, 82) disposed with one on each side of said exposed portion with their axes of rotation generally normal to the axis of rotation of said exposed end portion of said auger (73) for collecting said bulk material (3) and loading it into said uplift portion (72) and said second conveyor means (16), respectively, said pair of collecting augers (80, 82) being mounted for pivoting adjustment relative to the longitudinal axis of said exposed end portion of said auger (73).

2. Apparatus according to claim 1, characterized in that the enclosure (57) of at least the second conveyor means (16) includes a selectively operable aeration means (150, 152, 154) for injecting a compressed gaseous medium into the interior thereof while portions of the bulk material are passing therethrough.

3. Apparatus according to claim 2, characterized in that actuation of said aeration means is responsive to a predetermined load exerted on the conveyor means (16) in moving the bulk material portions through the enclosure (57).

4. Apparatus according to claim 3, characterized in that the second conveyor means (16) includes a hydraulically activated auger (58, 60) disposed within the enclosure (57) thereof, the actuation of the aeration means being responsive to a predetermined torque of the auger (58, 60).

5. Apparatus according to claim 1, characterized in that the rotatable support means (12, 212) is provided with a drop means (224) proximate the center of rotation of said support means (12), said drop means (224) having a portion thereof proximate the discharge end of said first conveyor means (14).

6. Apparatus according to claim 5, characterized in that the drop means (224) includes a telescoping dust-shielding enclosure through which the bulk material portions move by gravity to the second location.

7. Apparatus according to claim 1, characterized in that the rotatable support means (12, 212) is selectively movable relative to the first location along a predetermined path, and that an elongated transfer means (130) is disposed along the path of travel of said support means (12), said transfer means (130) including an elongated conveyor element (134) extending to the second location, said conveyor element (134) having a segment thereof subtending said support means (12) and in dust-shielding communication with the discharge end of said first conveyor means (14).

8. Apparatus according to claim 7, characterized in that the transfer means (130) includes an elongated enclosure aligned with the predetermined path of travel of said support means (12), said enclosure having the side thereof adjacent the support means (12) provided with an elongated flexible belting (142) of dust-shielding material noramlly closing said enclosure side, said belting (142) having successive segments thereof temporarily disengaged from said enclosure side and overlying a discharge means (136, 138, 140) carried on said support means (12) and coacting therewith to effect a substantially dust-tight communication between said discharge means (136, 138, 140) and the elongated enclosure of said transfer means as the support means (12) moves along said predetermined path.

9. Apparatus according to claim 8, characterized in that said enclosure comprises a trough having an open side, and that said flexible belting (142) has elongated portions normally engaging said trough at opposite edges of said open side.

10. Apparatus according to claim 8, characterized in that the discharge means (136, 138, 140) carried on the support means (12) includes means engaging and repositioning the elongated edges of said belting segments into yieldable engagement with the enclosure guides (144) subsequent to the support means (12) having moved past the belting segment.

11. Apparatus according to claim 1, characterized in that selective independent pivotal movement of the first conveyor means (14) is effected by extensible supports (28, 30A, 30B) carried on said rotatable support means (12) and in engagment with a boom (28) of said first conveyor means (14).

12. Apparatus according to claim 1, characterized in that the support means (212) includes an elongated boom (216) having one end thereof pivotally connected thereto and the opposite end thereof provided with means (218, 220) for suspending therefrom the distal end portion of said first conveyor means (214).

13. Apparatus according to claim 1, characterized in that the enclosure of said first conveyor means (14) is provided with a bifurcated inlet portion (40B, 40C) disposed in adjustable straddling relation with an upper end portion (55) of the enclosure of said second conveyor means (16).

14. Apparatus according to claim 1, characterized in that the second conveyor means (16) includes an auger (58, 60) disposed within the enclosure (57) thereof, the pitch of said auger (58, 60) increasing along at least a portion of its length beginning at the distal end (53) thereof.

15. Apparatus according to claim 1, characterized by means (71, 71') for controlled pivotal adjustment of said pair of augers (80, 82) relative to said conveyor section.

16. Apparatus according to claim 1, characterized in that said uplift portion (72) is normally disposed substantially vertically and said pair of augers (80, 82) is normally disposed substantially horizontally.

17. Apparatus according to claim 1, characterized in that said exposed end portion of the auger (73) decreases in diameter toward its distal end portion.

18. Apparatus according to claim 1, characterized in that said pair of augers (80, 82) is mounted for universal tilting movement relative to said uplift portion (72).

19. Apparatus according to claim 1, characterized by scraper means (110, 112) selectively movable between a raised position and a lower scraping position relative to said pair of augers (80, 82) for assistance in collecting such bulk material (3) from the bottom of a container (2) thereof.

20. Apparatus according to claim 19, characterized in that said collecting portion (74) includes a frame (76, 90) mounted on said uplift portion (72) and supporting said pair of augers (80, 82), a parallelogram linkage (114, 116) supporting said scraper means (110, 112) on said frame (76, 90) and means (118, 120) for raising and lowering said scraper means relative to said frame (76, 90).

21. Apparatus according to claim 1, characterized in that each of said pair of augers (80, 82) is exposed throughout its length.

22. Apparatus according to claim 1, characterized in that each of said pair of augers (80, 82) has opposite end portions each having auger flighting of opposite pitch relative to the other end portion thereof and positioned so that each such portion conveys material toward said exposed portion.

23. Apparatus according to claim 22, characterized in that said flighting of each of said portions decreases in diameter toward said exposed end portion of the auger (73).

24. Apparatus according to claim 20, characterized in that said collecting portion includes a first frame section (90) mounted on said uplift portion (72) for pivotal movement about a first axis generally perpendicular to the longitudinal axis of said exposed portion, a second frame section (76) mounted on said first frame section (90) for pivotal movement about an axis generally perpendicular to said first axis and to said longitudinal axis of said exposed portion, said pair of augers (80, 82) being supported on said second frame section (76), and that said controlled pivotal adjustment means (104, 105, 106) controls the tilting of said second frame section (76) relative to said uplift portion (72) and thereby provides universal tilting movement of said pair of augers (80, 82) relative to said uplift portion (72).

25. Apparatus according to claim 3, characterized in that said aeration means (150, 152, 154) is responsive to the torque load on a driving motor (62) of said second conveyor means (16) for actuating said injection means when such torque exceeds a predetermined value.

26. Apparatus according to claim 1, characterized in that said enclosure (57) of said second conveyor means (16) defines a closed cylinder normally oriented generally vertically in operation for elevating such bulk material (3).

27. A method of transferring a supply of aeratable bulk material disposed at a first location to a predetermined second location making use of the apparatus according to claim 1, said method comprising successively advancing portions of the bulk material to a predetermined area of the first location, successively moving at a first rate the advanced bulk material portions from the predetermined area in a generally vertically oriented direction to a first elevated station, successively moving at a second rate faster than the first rate the bulk material portions from the first elevated station in a generally vertically oriented direction to a second elevated station whereupon the bulk material portions are conveyed in a generally laterally oriented direction from the second elevated station to the second location.

28. The method of claim 27 including selectively aerating the bulk material portions while the latter is moving between the first and second elevated stations.

29. The method of claim 28 including aerating the bulk material portions in dependence upon the energy required in moving the bulk material portions from the first to the second elevated positions.

30. The method of claim 28 wherein jets of a compressed gaseous medium are directed into the bulk material portions as the latter move from the first elevated station to the second elevated station.

**Patentansprüche**

1. Vorrichtung zum Transportieren eines staubigen Schüttguts (3), welches sich an einer ersten Stelle (2) befindet, zu einer vorgegebenen zweiten Stelle, welche, in Kombination, umfaßt:

Halterungseinrichtungen (12), die in der Nähe der zweiten Stelle angeordnet und selektiv um eine im wesentlichen vertikale erste Achse drehbar sind;

eine längliche, erste Fördervorrichtung (14), die mit den Halterungseinrichtungen (12) verbunden ist, die als Einheit (gemeinsam) mit den Halterungseinrichtungen (12) um die erste Achse drehbar ist und die unabhängig von den Halterungseinrichtungen (12) bewegbar, selektiv um eine im wesentlichen horizontale zweite Achse schwenkbar ist, wobei die erste Fördervorrichtung (14) nach außen von den Halterungseinrichtungen (12) absteht und nur an einen Ende durch die Halterungseinrichtungen (12) gehaltert ist und wobei diese Fördervorrichtung eine längliche, staubabschirmende Ummantelung aufweist, durch welche Teile des Schüttguts in Richtung auf ein auslaßseitiges Ende hindurchgehen, welches in der Ummantelung ausgebildet ist und wobei das auslaßseitige Ende angrenzend an die Halterungseinrichtungen vorgesehen ist;

eine längliche, zweite Fördervorrichtung (16), die im Abstand von den Halterungseinrichtungen (12) angeordnet ist und mit einem fernen Ende der ersten Fördervorrichtung (12) verbunden ist und von dieser harabhängt und die unabhängig von der ersten Fördervorrichtung (14) selektiv beweglich und um eine im wesentlichen horizontale dritte Achse schwenkbar ist, wobei die zweite Fördervorrichtung (16) eine längliche, staubabschirmende Ummantelung (56) aufweist, durch welche Teile des Schüttmaterials in Richtung auf ein einlaßseitiges Ende der Ummantelung der ersten Fördervorrichtung hindurchwandern;

Speiseeinrichtungen (18), welche einen Hubteil (72) umfassen, der eine Schnecke (73) umfaßt, die einen freiliegenden Endbereich hat, wobei die Speiseeinrichtungen (18) dadurch gekennzeichnet sind, daß der Hubteil (72) eine staubabschirmende Hubteil Ummantelung umfaßt, welche einen Teil der Schnecke (73) umgibt, die einen freiliegenden Endbereich besitzt, daß ein Ende des Hubteils (72) an einem unteren, fernen Endbereich (53) der Ummantelung der zweiten Fördervorrichtung (16) befestigt ist, daß der Hubteil (72) so ausgebildet ist, daß Teile des Schüttmaterials (2) durch den Hubteil (72) in Richtung auf den unteren fernen Endbereich (53) der zweiten Fördervorrichtung (16) mit einer Rate hindurchwandern, die niedriger ist als die Rate, mit der die Schüttmaterialteile durch die Ummantelung (57) der zweiten Fördervorrichtung hindurchwandern, und daß die Speiseeinrichtungen (18) einen Sammelteil (74) umfassen, welcher ein Paar von Sammelschnecken (80, 82) umfaßt, die derart angeordnet sind, daß sich jeweils eine von ihnen auf jeder Seite des freiliegenden Endbereichs befindet, wobei ihre Drehachsen im wesentlichen senkrecht zur Drehachse des freiliegenden Endbereichs der genannten Schnecke (73) verlaufen, um das Schüttmaterial (3) zu sammeln und es in den Hubteil (72) bzw. die zweite Fördervorrichtung (16) zu laden, wobei das genannte Paar von Sammelschnecken (80, 82) so montiert ist, daß es zur Einstellung relativ zur Längsachse des genannten freiliegenden Endbereichs der Schnecke (73) schwenkbar ist.

2. Vorrichtung nach Anspruch 1, dadurch gekennzeichnet, daß zumindest die Ummantelung (57) der zweiten Fördervorrichtung (16) selektiv betätigbare Belüftungseinrichtungen (150, 152, 154) umfaßt, um ein komprimiertes, gasförmiges Medium in das Innere derselben zu injizieren, während Teile des Schüttmaterials dadurch hindurchwandern.

3. Vorrichtung nach Anspruch 2, dadurch gekennzeichnet, daß die Betätigung der Belüftungseinrichtungen auf eine vorgegebene Last anspricht, welche auf die Fördervorrichtung (16) beim Bewegen der Schüttmaterialteile durch die Ummantelung (57) ausgeübt wird.

4. Vorrichtung nach Anspruch 3, dadurch gekennzeichnet, daß die zweite Fördervorrichtung (16) eine hydraulisch berätigte Schnecke (58, 60) umfaßt, die innerhalb ihrer Ummantelung (57) angeordnet ist, und daß die Betätigung der Belüftungseinrichtungen auf ein vorgegebenes Drehmoment der Schnecke (58, 60) anspricht.

5. Vorrichtung nach Anspruch 1, dadurch gekennzeichnet, daß die drehbaren Halterungseinrichtungen (12, 212) in der Nähe des Zentrums der Drehbewegung der Halterungseinrichtungen (12) mit einer Abwurfeinrichtung (224) versehen sind, welche einen Bereich besitzt, der in der Nähe des auslaßseitigen Endes der ersten Fördervorrichtung (14) angeordnet ist.

6. Vorrichtung nach Anspruch 5, dadurch gekennzeichnet, daß die Abwurfeinrichtung (224) eine teleskopierbare, staubabschirmende Ummantelung aufweist, durch die sich die Schüttgutteile auftrund der Gewichtskraft zu der zweiten Stelle bewegen.

7. Vorrichtung nach Anspruch 1, dadurch gekennzeichnet, daß die drehbaren Halterungseinrichtungen (12, 212) längs eines vorgegebenen Weges selektiv bezüglich der ersten Position beweglich sind und daß längs des Laufweges der Halterungseinrichtungen (12) längliche Transporteinrichtungen (130) angeordnet sind, welche ein längliches Transportelement (134) umfassen, welches sich bis zu der zweiten Stelle erstreckt, wobei das Transportelement (134) ein Segment umfaßt, welches sich unter die Halterungseinrichtungen (12) erstreckt und in staubabschirmender Verbindung mit dem auslaßseitigen Ende der ersten Transportvorrichtung (14) steht.

8. Vorrichtung nach Anspruch 7, dadurch gekennzeichnet, daß die Transportvorrichtung (130) eine längliche Ummantelung aufweist, welche mit dem Laufweg der Halterungseinrichtungen (12) fluchtet, wobei die Ummantelung eine an die Halterungseinrichtungen (12) angrenzende Seite besitzt, die mit einem länglichen, flexiblen Band (142) aus staubabschirmendem Material versehen ist, welches diese Seite der Ummantelung normalerweise verschließt, wobei das Band (142) aufeinanderfolgende Segmente besitzt, die zeitweise außer Eingriff mit der genannten Seite der Ummantelung gebracht werden und (dann) über Entleerungseinrichtungen (136, 138, 140) liegen, welche von den Halterungseinrichtungen (12) getragen werden und damit (mit den Entleerungseinrichtungen) zusammenwirken, um eine im wesentlichen staubdichte Verbindung zwischen den Entleerungseinrichtungen (136, 138, 140) und der länglichen Ummantelung der Transporteinrichtung zu schaffen, wenn sich die Halterungseinrichtungen (12) längs des vorgegebenen Weges bewegen.

9. Vorrichtung nach Anspruch 8, dadurch gekennzeichnet, daß die genannte Ummantelung einen Trog mit einer offenen Seite umfaßt und daß das flexible Band (142) längliche Teile hat, die normalerweise in Eingriff mit dem Trog an gegenüberliegenden Kanten der offenen Seite derselben stehen.

10. Vorrichtung nach Anspruch 8, dadurch gekennzeichnet, daß die Entleerungseinrichtungen (136, 138, 140), die von den Halterungseinrichtungen (12) getragen werden, Einrichtungen umfassen, um die langgestreckten Kanten der Bandabschnitte zu erfassen und sie wieder in elastischen Kontakt mit den Ummantelungsführungen (144) zu bringen, nachdem sich die Halterungseinrichtungen (12) an dem Bandsegment vorbeibewegt haben.

11. Vorrichtung nach Anspruch 1, dadurch gekennzeichnet, daß die selektive, unabhängige Schwenkbewegung der ersten Fördervorrichtung (14) mittels ausfahrbarer Halterungen (28, 30A, 30B) bewirkt wird, welche von den drehbaren Halterungseinrichtungen (12) getragen werden und in Eingriff mit einem Mast (28) der ersten Fördervorrichtung (14) stehen.

12. Vorrichtung nach Anspruch 1, dadurch gekennzeichnet, daß die Halterungseinrichtungen (212) einen länglichen Mast (216) umfassen, dessen eines Ende schwenkbar mit ihnen verbunden ist und dessen entgegengesetztes Ende mit Einrichtungen (218, 220) versehen ist, um daran den fernen Endbereich der ersten Fördervorrichtung (214) aufzuhängen.

13. Vorrichtung nach Anspruch 1, dadurch gekennzeichnet, daß die Ummantelung der ersten Fördervorrichtung (14) mit einem gegabelten Einlaßbereich (40B, 40C) versehen ist, der einen oberen Endbereich (55) der Ummantelung der zweiten Fördervorrichtung (16) einstellbar umgreift.

14. Vorrichtung nach Anspruch 1, dadurch gekennzeichnet, daß die zweite Fördervorrichtung (16) eine innerhalb ihrer Ummantelung (57) angeordnete Schnecke (58, 60) umfaßt, wobei die Steigung der Schnecke (58, 60), beginnend vom fernen Ende (53) derselben auf mindestens einem Teil ihrer Länge zunimmt.

15. Vorrichtung nach Anspruch 1, gekennzeichnet durch Einrichtungen (71, 71') für eine kontrollierte Schwenkeinstellung des Schneckenpaares (80, 82) bezüglich des genannten Förderabschnitts.

16. Vorrichtung nach Anspruch 1, dadurch gekennzeichnet, daß der Hubteil (72) normalerweise im wesentlichen vertikal ausgerichtet ist und daß das Schneckenpaar (80, 82) normalerweise im wesentlichen horizontal angeordnet ist.

17. Vorrichtung nach Anspruch 1, dadurch gekennzeichnet, daß der Durchmesser des freien Endbereichs der Schnecke (73) in Richtung auf sein fernes (freies) Ende abnimmt.

18. Vorrichtung nach Anspruch 1, dadurch gekennzeichnet, daß das Schneckenpaar (80, 82) für eine universelle Kippbewegung bezüglich des Hubteils (72) montiert ist.

19. Vorrichtung nach Anspruch 1, gekennzeichnet durch Schrappeinrichtungen (110, 112), welche selektiv zwischen einer angehobenen Position und einer unteren Schrapposition relativ zu dem Schneckenpaar (80, 82) beweglich sind, um das Sammeln des Schüttmaterials vom Boden eines Behälters (2) für dasselbe zu unterstützen.

20. Vorrichtung nach Anspruch 19, dadurch gekennzeichnet, daß der Sammelteil (74) einen Rahmen (76, 90) umfaßt, der an dem Hubteil (72) montiert ist und das Schneckenpaar (80, 82) trägt, sowie ein Parallelogrammgestänge (114, 116), welches die Schrappeinrichtungen (110, 112) an dem Rahmen (76, 90) haltert, und Einrichtungen (118, 120) zum Anheben und Absenken der Schrappeinrichtungen bezüglich des Rahmens (76, 90).

21. Vorrichtung nach Anspruch 1, dadurch gekennzeichnet, daß jede Schnecke des Schneckenpaares (80, 82) auf ihrer gesamten Länge freiliegt.

22. Vorrichtung nach Anspruch 1, dadurch gekennzeichnet, daß jede der Schnecken des Schneckenpaares (80, 82) gegenüberliegende Endbereiche hat, von denen jeder Schneckengänge entgegengesetzter Steigung bezüglich des anderen Endbereichs besitzt, und daß jede der Schnecken so angeordnet ist, daß jeder dieser Schneckenteile das Material in Richtung auf den freiliegenden (End-) Bereich (der Hubvorrichtung) fördert.

23. Vorrichtung nach Anspruch 22, dadurch gekennzeichnet, daß die Schneckenflügel jedes der Enden im Durchmesser in Richtung auf den freiliegenden Endbereich der Schnecke (73) abnehmen.

24. Vorrichtung nach Anspruch 20, dadurch gekennzeichnet, daß de Sammelteil einen ersten Rahmenteil (90) umfaßt, der an dem Hubteil (72) derart montiert ist, daß er um eine erste zur Längsachse des freiliegenden Schneckenteils im wesentlichen senkrechte Achse schwenkbar ist, sowie einen zweiten Rahmenteil (76), der an dem ersten Rahmenteil (90) derart montiert ist, daß er um eine zu der ersten Achse und zur Längsachse des freiliegenden Schneckenteils im wesentlichen senkrechte Achse schwenkbart ist, daß das Schneckenpaar an dem zweiten Rahmenteil (76) gehaltert ist und daß die gesteuerten Einstelleinrichtungen (104, 105, 106) für die Schwenkbewegung das Kippen des zweiten Rahmenteils (76) bezüglich des Hubteils (72) steuern und damit eine universelle Kippbewegung des Schneckenpaares (80, 82) bezüglich des Hubteils (72).

25. Vorrichtung nach Anspruch 3, dadurch gekennzeichnet, daß die Belüftungseinrichtungen (150, 152, 154) auf eine Drehmomentbelastung eines Antriebsmotors (62) der zweiten Fördervorrichtung (16) ansprechen, um die Injektions-(Einblas-)Einrichtungen zu betätigen, wenn dieses Drehmoment einen vorgegebenen Wert überschreitet.

26. Vorrichtung nach Anspruch 1, dadurch gekennzeichnet, daß die Ummantelung (57) der zweiten Fördervorrichtung (16) einen geschlossenen Zylinder definiert, der nomalerweise im Betrieb zum Anheben des Schüttmaterials (3) im wesentlichen senkrecht ausgerichtet ist.

27. Verfahren zum Transportieren eines Vorrats von belüftbarem Schüttmaterial, welches sich an einer ersten Stelle befindet, zu einer zweiten Stelle unter Verwendung der Vorrichtung gemäß Anspruch 1, wobei das Verfahren umfaßt: Teile des Schüttmaterials werden nacheinander zu einem vorgegebenen Bereich an der ersten Stelle transportiert, die transportierten Teile des Schüttmaterials werden von dem vorgegebenen Bereich nacheinander mit einer ersten Geschwindigkeit in einer im wesentlichen vertikal orientierten Richtung zu einer ersten erhöhten Station transportiert, die Teile des Schüttmaterials werden von der ersten erhöhten Station nacheinander mit einer zweiten Geschwindigkeit, die höher ist als die erste Geschwindigkeit, in einer im wesentlichen vertikal orientierten Richtung zu einer zweiten erhöhten Station transportiert, woraufhin die Teile des Schüttmaterials in einer im wesentlichen seitlich orientierten Richtung von der zweiten erhöhten Station zu der zweiten Stelle transportiert werden.

28. Verfahren nach Anspruch 27, welches das selektive Belüften der Schüttmaterialteile umfaßt, wenn letztere sich zwischen der ersten und der zweiten erhöhten Station bewegen.

29. Verfahren nach Anspruch 28, welches das Belüften der Schüttmaterialteile in Abhängigkeit von der Energie umfaßt, die zum Bewegen der Schüttmaterialteile von der ersten in die zweite erhöhte Position erforderlich ist.

30. Verfahren nach Anspruch 28, bei dem Strahlen eines komprimierten, gasförmigen Mediums in die Schüttmaterialteile gerichtet werden, während letztere sich von der ersten erhöhten Station zu der zweiten erhöhten Station bewegen.

## Revendications

1. Appareil pour transférer un stock de matière pulvérulente en vrac, disposée en un premier emplacement (2), vers un second emplacement prédéterminé, comprenant en combinaison:

des moyens (12) de support proches du second emplacement et pouvant tourner sélectivement autour d'un premier axe sensiblement vertical;

des premiers moyens transporteurs allongés (14) raccordés auxdits moyens (12) de support et pouvant tourner d'un seul bloc avec eux autour dudit premier axe, et pouvant être déplacés sélectivement, en pivotant, indépendamment desdits moyens (12) de support, autour d'un deuxième axe sensiblement horizontal faisant saillie vers l'extérieur desdits moyens (12) de support et supporté uniquement à une première extrémité par lesdits moyens (12) de support, lesdits moyens transporteurs comprenant une enceinte allongée anti-poussière à travers laquelle des parties de la matière pulvérulente passent en se dirigeant vers une extrémité de décharge formée dans ladite enceinte, ladite extrémité de décharge étant adjacente auxdits moyens de support;

des seconds moyens transporteurs allongés (16) espacés desdits moyens de support (12) et raccordés à, et descendant de, une partie distale desdits premiers moyens transporteurs (14), et pouvant être déplacés sélectivement, en pivotant, indépendamment desdits premiers moyens transporteurs (14) autour d'un troisième axe sensiblement horizontal, lesdits seconds moyens transporteurs (16) comprenant une enceinte allongée (56) anti-poussière à travers laquelle des parties de la matière en vrac passent en se dirigeant vers une extrémité d'entrée de l'enceinte desdits premiers moyens transporteurs;

des moyens d'alimentation (18) comprenant une partie élévatrice (72) comportant une vis (73) ayant un tronçon extrême à découvert, lesdits moyens d'alimentation (18) étant caractérisés en ce que ladite partie élévatrice (72) comprend une enceinte élévatrice anti-poussière entourant une partie de ladite vis (73) ayant une partie extrême à découvert, en ce qu'une première extrémité de ladite partie élévatrice (72) est reliée à une partie extrême distale inférieure (53) de l'enceinte (57) desdits seconds moyens transporteurs (16), en ce que ladite partie élévatrice (72) est conçue de manière que des parties de la matière en vrac (3) passe à travers ladite partie élévatrice (72) en se dirigeant vers ladite partie extrême distale inférieure (53) desdits seconds moyens transporteurs (16) à une vitesse inférieure à la vitesse à laquelle les parties de la matière en vrac passent à travers ladite enceinte (57) desdits seconds moyens transporteurs, et en ce que lesdits moyens d'alimentation (18) comprennent aussi une partie collectrice (74) comportant deux vis collectrices (80, 82) disposées chacune sur un côté de ladite partie exposée de façon que leurs axes de rotation soient globalement normaux à l'axe de rotation de ladite partie extrême à découvert de ladite vis (73) pour collecter ladite matière en vrac (3) et la charger dans ladite partie élévatrice (72) et dans lesdits seconds moyens transporteurs (16), respectivement, ladite paire de vis collectrices (80, 82) étant montées de façon à pouvoir être réglées en pivotant par rapport à l'axe longitudinal de ladite partie extrême à découvert de ladite vis (73).

2. Appareil selon la revendication 1, caractérisé en ce que l'enceinte (57) d'au moins les seconds moyens transporteurs (16) comprend des moyens d'aération (150, 152, 154) manoeuvrables sélectivement pour injecter un milieu gazeux comprimé à l'intérieur de cette enceinte, tandis que des parties de la matière en vrac la traversent.

3. Appareil selon la revendication 2, caractérisé en ce que l'actionnement desdits moyens d'aération s'effectue en réaction à une charge prédéterminée exercée sur les moyens transporteurs (16) lors du déplacement des parties de la matière en vrac à travers l'enceinte (57).

4. Appareil selon la revendication 3, caractérisé en ce que les seconds moyens transporteurs (16) comprennent une vis (58, 60) actionnée hydrauliquement disposée à l'intérieur de l'enceinte (57) de ces seconds moyens transporteurs, l'actionnement des moyens d'aération s'effectuant en réaction à un couple prédéterminé de la vis (58, 60).

5. Appareil selon la revendication 1, caractérisé en ce que les moyens rotatifs de support (12, 212) comprennent un moyen de descente (224) proche du centre de rotation desdits moyens de support (12), ledit moyen de descente (224) comportant une partie proche de l'extrémité de décharge desdits premiers moyens transporteurs (14).

6. Appareil selon la revendication 5, caractérisé en ce que le moyen de descente (224) comprend une enceinte télescopique anti-poussière à travers laquelle les parties de la matière en vrac se déplacent par gravité vers le second emplacement.

7. Appareil selon la revendication 1, caractérisé en ce que les moyens rotatifs de support (12, 212) peuvent être déplacés sélectivement par rapport au premier emplacement le long d'un trajet prédéterminé, et en ce qu'un moyen allongé (130) de transfert est disposé le long du trajet de déplacement desdits moyens (12) de support, ledit moyen (130) de transfert comprenant un élément transporteur allongé (134) s'étendant jusqu'au second emplacement, ledit élément transporteur (134) ayant un segment qui sous-tend lesdits moyens de support (12) et qui est en communication anti-poussière avec l'extrémité de décharge desdits premiers moyens transporteurs (14).

8. Appareil selon la revendication 7, caractérisé en ce que les moyens de transfert (130) comprennent une enceinte allongée alignée avec le trajet prédéterminé de déplacement desdits moyens (12) de support, le côté de ladite enceinte adjacent aux moyens (12) de support comportant une bande flexible et allongée (142) en matière anti-poussière fermant normalement ledit côté de l'enceinte, des tronçons successifs de ladite bande (142) se dégageant momentanément dudit côté de l'enceinte et s'étendant audessus de moyens (136, 138, 140) de décharge portés par lesdits moyens de support (12) et coopérant avec eux pour établir une communication sensiblement étanche à la poussière entre lesdits moyens de décharge (136, 138, 140) et l'enceinte allongée dudit moyen de transfert pendant que les moyens de support (12) se déplacent le long dudit trajet prédéterminé.

9. Appareil selon la revendication 8, caractérisé en ce que ladite enceinte comprend une auge ayant un côté ouvert, et en ce que ladite bande flexible (142) comporte des parties allongées qui s'appliquent normalement contre ladite auge, sur des bords opposés dudit côté ouvert.

10. Appareil selon la revendication 8, caractérisé en ce que les moyens de décharge (136, 138, 140) portés par les moyens de support (12) comprennent des moyens entrant en prise avec les bords allongés desdits segments de la bande et les repositionnant en prise souple avec les guides (144) de l'enceinte après que les moyens de support (12) se sont déplacés au-delà du segment de la bande.

11. Appareil selon la revendication 1, caractérisé en ce qu'un pivotement indépendant sélectif des premiers transporteurs (14) est effectué par des supports extensibles (28, 30A, 30B) portés par lesdits moyens rotatifs (12) de support et en prise avec une flèche (28) desdits premiers moyens (14) de transport.

12. Appareil selon la revendication 1, caractérisé en ce que les moyens de support (212) comprennent une flèche allongée (216) dont une première extrémité est reliée de façon pivotante aux moyens de support et dont l'extrémité opposée est munie de moyens (218, 220) auxquels la partie extrême distale desdits premiers moyens transporteurs (214) est destinée à être suspendue.

13. Appareil selon la revendication 1, caractérisé en ce que l'enceinte desdits premiers moyens transporteurs (14) comporte une partie d'entrée en fourche (40B, 40C) disposée en position de chevauchement réglable par rapport à une partie extrême supérieure (55) de l'enceinte desdits seconds moyens transporteurs (16).

14. Appareil selon la revendication 1, caractérisé en ce que les seconds moyens transporteurs (16) comprennent une vis (58, 60) disposée à l'intérieur de leur enceinte (57), le pas de ladite vis (58, 60) augmentant le long d'au moins une partie de sa longueur commençant à son extrémité distale (53).

15. Appareil selon la revendication 1, caractérisé par des moyens (71, 71') de réglage pivotant commandé de ladite paire de vis (80, 82) par rapport à ladite section transporteuse.

16. Appareil selon la revendication 1, caractérisé en ce que ladite partie élévatrice (72) est normalement disposée sensiblement verticalement et ladite paire de vis (80, 82) est normalement disposée sensiblement horizontalement.

17. Appareil selon la revendication 1, caractérisé en ce que ladite partie extrême à découvert de la viz (73) diminue de diamètre vers sa partie extrême distale.

18. Appareil selon la revendication 1, caractérisé en ce que ladite paire de vis (80, 82) est montée de façon à effectuer un mouvement d'inclinaison universelle par rapport à ladite partie élévatrice (72).

19. Appareil selon la revendication 1, caractérisé par des moyens racleurs (110, 112) mobiles sélectivement entre une position haute et une position basse de raclage par rapport à ladite paire de vis (80, 82) pour aider à collecter la matière en vrac (3) provenant du fond d'un conteneur (2) de cette matière.

20. Appareil selon la revendication 19, caractérisé en ce que ladite partie collectrice (74) comprend un bâti (76, 90) monté sur ladite partie élévatrice (72) et supportant ladite paire de vis (80, 82), un parallélogramme articulé (114, 116) supportant lesdits moyens racleurs (110, 112) sur ledit bâti (76, 90) et des moyens (118, 120) destinés à faire monter et descendre lesdits moyens racleurs par rapport audit bâti (76, 90).

21. Appareil selon la revendication 1, caractérisé en ce que chacune de ladite paire de vis (80, 82) est à découvert sur toute sa longueur.

22. Appareil selon la revendication 1, caractérisé en ce que chacune de ladite paire de vis (80, 82) comporte des parties extrêmes opposées ayant chacune une spire de vis de pas opposé par rapport à son autre partie extrême et positionnées de façon que chacune de ces parties transporte de la matière vers ladite partie à découvert.

23. Appareil selon la revendication 22, caractérisé en ce que ladite spire de chacune desdites parties diminue de diamètre vers ladite partie extrême à découvert de la vis (73).

24. Appareil selon la revendication 20, caractérisé en ce que ladite partie collectrice comprend une première partie de bâti (90) montée sur ladite partie élévatrice (72) afin de pivoter autour d'un premier axe globalement perpendiculaire à l'axe longitudinal de ladite partie à découvert, une seconde partie de bâti (76) montée sur ladite première partie de bâti (90) afin de pivoter autour d'un axe globalement perpendiculaire audit premier axe et audit axe longitudinal de ladite partie à découvert, ladite paire de vis (80, 82) étant supportée par ladite seconde partie de bâti (76), et en ce que lesdits moyens de réglage pivotants commandés (104, 105, 106) commandent l'inclinaison de ladite seconde partie de bâti (76) par rapport à ladite partie élévatrice (72) et produisent ainsi un mouvement d'inclinaison universel de ladite paire de vis (80, 82) par rapport à ladite partie élévatrice (72).

25. Appareil selon la revendication 3, caractérisé en ce que lesdits moyens d'aération (150, 152, 154) réagissent au couple de charge imposé à un moteur d'entraînement (62) desdits seconds moyens transporteurs (16) de façon à actionner lesdits moyens d'injection lorsque ce couple dépasse une valeur prédéterminée.

26. Appareil selon la revendication 1, caractérisé en ce que ladite enceinte (57) desdits seconds moyens transporteurs (16) définit un cylindre fermé normalement orienté à peu près verticalement en fonctionnement, pour élever cette matière en vrac (3).

27. Procédé pour transférer un stock de matière en vrac pouvant être aérée, disposé en un premier emplacement, vers un second emplacement prédéterminé, en utilisant un appareil selon la revendication 1, ledit procédé consistant à faire avancer successivement des parties de la matière en vrac vers une zone prédéterminée dudit premier emplacement, à déplacer successivement à une première vitesse les parties avancées de matière en vrac à partir de la zone prédéterminée, dans une direction orientée globalement verticalement, jusqu'à un premier poste élevé, à déplacer successivement, à une seconde vitesse supérieure à la première vitesse, les parties de la matière en vrac du premier poste élevé, dans une direction orientée globalement verticalement, vers un second poste élevé après lequel les parties de la matière en vrac sont transportées dans une direction orientée à peu près latéralement, du second poste élevé vers le second emplacement.

28. Procédé selon la revendication 27, consistant à aérer sélectivement les parties de la matière en vrac pendant qu'elles sont déplacées entre les premier et second postes élevés.

29. Procédé selon la revendication 28, consistant à aérer les parties de la matière en vrac en fonction de l'énergie demandée pour déplacer les parties de la matière en vrac de la première à la seconde position élevée.

30. Procédé selon la revendication 28, dans lequel des jets d'un milieu gazeux comprimé sont dirigés dans les parties de la matière en vrac pendant qu'elles se déplacent du premier poste élevé vers le second poste élevé.

FIG. 1

FIG. 3

FIG. 2

FIG. 4

132    130

138
140
148
142  144
146
136  134  135

FIG. 7

286  288  292  290  294
296
298
284
282

FIG. 6

258  260
262  270
272
250  264
263
254  256  266  252

286
300
304
302
284
282

280

0 118 531

3

FIG. 5